# DEMANDE DE BREVET EUROPEEN

(11) **EP 1 873 122 A1**
(43) Date de publication de la demande: **02.01.2008**
(21) Numéro de dépôt: 07290805.6
(22) Date de dépôt: 28.06.2007
(51) Int. Cl.: C02F 11/00, C02F 1/52, C05F 3/00, C02F 103/20, C02F 101/16

(54) **Procédé pour traiter un lisier tel qu'un lisier de porc**

(30) Priorité: 28.06.2006 FR 0605822
(71) Demandeur: Cycliz SAS, 02400 Chierry (FR)
(72) Inventeur: Leroux, Christian, 02400 Essomes sur Marne (FR); Vernoine, Frédéric, 02310 Nogent l'Artaud (FR)
(74) Mandataire: Hammond, William

(57) **Abrégé**

Procédé pour traiter un lisier tel qu'un lisier de porc, comprenant une première étape de coagulation et décantation, une deuxième étape de lavage et une troisième étape d'oxygénation, la première étape consiste en une adjonction d'ions ferriques puis de lait de chaux.

## Description

La présente invention est relative à un procédé pour traiter un lisier tel qu'un lisier de porc.

Le lisier est constitué par l'ensemble des déjections liquides et solides mélangées avec de la litière telle que de la paille. Ce produit est riche en matière azotée sous forme ammoniacale en particulier. Généralement, le lisier est ensuite épandu dégageant ainsi des odeurs nauséabondes, source de nuisance pour le voisinage.

On connaît un certain nombre de procédé pour traiter un lisier, tel que celui décrit dans le document FR-2.808.792-A comprenant les étapes suivantes :
- Adjonction de chaux vive ou éteinte directement dans le lisier : ceci précipite une partie de l'azote ammoniacal, des matières organiques en suspension, le phosphore sous forme de sels de calcium et le potassium.
- Récupération par décantation des boues qui sont éliminées et d'une phase liquide H1.
- Entraînement de l'ammoniac gazeux par un flux d'air : la phase liquide H1 est traitée par entraînement d'air de telle sorte que l'azote minéralisable contenu se volatilise en ammoniac gazeux qui est entraîné par le flux d'air. L'ammoniac ainsi volatilisé est neutralisé par de l'acide sulfurique sous forme de sulfate d'ammonium.
- Adjonction de chlorure de sodium : la phase liquide issue de l'étape précédente est mélangée à du chlorure de sodium et à de l'acide sulfurique. Ces adjonctions ont pour but d'obtenir une valeur de conductivité minimale et un pH compris entre 6 et 9.
- Electrofloculation : ceci permet de précipiter les matières en suspension et les colloïdes sous forme de flocs, de précipiter le phosphore et d'oxyder les matières organiques. De plus, le chlorure de sodium donne naissance à des hypochlorites présentant des caractéristiques bactéricides.
- Séparation par flottation des flocs puis décantation pour recueillir des boues et un liquide épuré exempt de bactéries et contenant des hypochlorites.

Un tel procédé présente notamment comme inconvénient d'obtenir de faibles taux d'abattement, de ne pas être adapté aux variations de composition du lisier et de produire un effluent de sortie peu stable car riche en sulfure.

Aussi un des buts de la présente invention est-il de fournir un procédé pour traiter une boue tel que du lisier de porc qui permet d'obvier aux inconvénients ci-dessus.

Un autre but est de fournir un tel procédé qui permet de fractionner le lisier en deux grandes catégories de produits : la première pouvant être utilisée pour fertiliser les sols et la seconde pour l'irrigation.

Un but supplémentaire de la présente invention est de fournir un tel procédé qui permet de réduire notablement les odeurs dans des élevages de porcs.

Ces buts, ainsi que d'autres qui apparaîtront par la suite, sont atteints par un procédé pour traiter un lisier tel qu'un lisier de porc, qui comprend une première étape de coagulation et décantation, une deuxième étape de lavage et une troisième étape d'oxygénation, lequel procédé est caractérisé, selon la présente invention, par le fait que la première étape consiste en une adjonction d'ions ferriques puis de lait de chaux.

Avantageusement, ce procédé comprend une étape préalable pour diminuer la quantité de matière sèche en suspension, par exemple par centrifugation.

De préférence, la première étape de coagulation et de décantation, comprend trois temps : un premier temps au cours duquel on incorpore sous agitation rapide des ions ferriques par exemple sous forme de chlorure ferrique, puis, dans un deuxième temps, on apporte du lait de chaux sous agitation lente, et le troisième temps consiste en une décantation pour recueillir, d'une part, une phase liquide et, d'autre part, une phase solide.

La description qui suit, et qui ne présente aucun caractère limitatif, permettra à l'homme du métier de mieux comprendre la mise en oeuvre du procédé selon l'invention et de ces avantages. Elle est relative à un exemple de réalisation relatif au traitement d'un lisier de porc.

Dans une étape préliminaire, on soumet le lisier à une centrifugation qui a pour but de diminuer la charge en suspension du lisier brut afin, d'une part, de faciliter la première étape du procédé selon l'invention et, d'autre part, de réduire la quantité de chaux lors de cette première étape.

La première étape du procédé est une étape de coagulation et de décantation, comprenant en fait trois temps : un premier temps au cours duquel on incorpore sous agitation rapide des ions ferriques par exemple sous forme de chlorure ferrique, puis dans un deuxième temps on apporte du lait de chaux sous agitation lente, et le troisième temps consiste en une décantation pour recueillir, d'une part, une phase liquide et, d'autre part, une phase solide.

Puis on soumet la phase liquide obtenue à l'issue de la première étape à une pulvérisation afin d'épuiser l'ammoniaque présent dans cette phase. L'ammoniaque ainsi libéré est aussitôt envoyé dans un laveur de gaz pour produire une solution de sulfate d'ammonium à 7 à 8 % en poids de sulfate d'ammonium (NH₄)₂SO₄.

Le liquide issu de l'étape de pulvérisation est envoyé dans une fosse de stockage où il est oxygéné pour terminer l'extraction d'ammoniaque et provoquer une baisse de la DCO.

Ainsi, des analyses pratiquées à l'issue du procédé ont permis de montrer l'abaissement obtenu comme indiqué dans le tableau ci-après :

| Eléments analysés | Unités | Résultats | Abattements obtenus |
|---|---|---|---|
| pH | - | 8,2 | |
| MES | g/l | 13,6 | |
| NK | kg/m3 | 2,51 | 93,62% |
| NH₄ | kg/m3 | 2,22 | 94,4% |
| P₂O₅ | kg/m3 | 1,31 | 96,7% |
| K₂O | kg/m3 | 1,78 | 31,4% |
| Fe | mg/kg MS | 2191 | |

Le liquide issu du procédé selon la présente invention peut être utilisé pour pratiquer un lavage des salles d'élevage de porcs à raison de 1 ou 2 cycles par jour. Ceci permet d'évacuer quotidiennement les déjections des animaux et de supprimer les dégagements d'ammoniac (NH₃) et d'hydrogène sulfureux (H₂S) dans les salles d'élevage.

### Exemple

Il a été traité 400 m³ de lisier de porcs (ce qui correspond à la quantité recueillie de lisier pendant 40 jours) ayant la composition suivante :

| | |
|---|---|
| MES | 13,6 kg/m3 |
| NK | 2,5 kg/m3 |
| NH₄ | 2,2 kg/m3 |
| P₂O₅ | 1,3 kg/m3 |
| K₂O | 1,7 kg/m3 |

Ce lisier, dont la teneur en matière sèche est comprise entre 14 et 18 g/l en général, est centrifugé de telle sorte qu'à l'issue de la centrifugation sa teneur en matière sèche soit de 3 g/l à 4 g/l. Cette faible teneur en matière sèche, de faible variabilité, permet de ne pas devoir faire varier les apports de produit ultérieurs.

Ensuite, on incorpore sous agitation rapide, à une vitesse de l'ordre de 250 t/mn pendant 15 mn, du chlorure ferrique à raison de 500 ppm par m³ de lisier centrifugé, puis un lait de chaux, dans une quantité correspondant à un apport de 15 kg de chaux (CaO) par m³ de lisier centrifugé et sous agitation lente, c'est-à-dire à une vitesse de l'ordre de 100 t/mn pendant environ 5 mn. Cette agitation lente permet notamment de bien répartir le lait de chaux afin d'obtenir une floculation satisfaisante sans déstructurer les flocs formés.

On récupère ainsi une phase liquide qui est ensuite soumise à une pulvérisation afin d'épuiser l'ammoniaque présent dans cette phase.

L'ammoniaque libérée lors de l'étape de pulvérisation est lavée par une solution d'acide sulfurique à raison de 0,8 I par m³ de lisier.

A l'issue de ce procédé on obtient une première catégorie de produits qui sont solides (un compost, du sulfate d'ammonium et un amendement organo phosphocalcique) et une seconde catégorie de produits qui est liquide.

## Revendications

1. - Procédé pour traiter un lisier de porc, qui comprend une première étape de coagulation et décantation, une deuxième étape de lavage par pulvérisation et une troisième étape d'oxygénation, **caractérisé par le fait que** la première étape consiste en une adjonction d'ions ferriques puis de lait de chaux.

2. - Procédé selon la revendication 1, **caractérisé par le fait qu'**il comprend une étape préalable pour diminuer la quantité de matière sèche en suspension, par exemple par centrifugation.

3. - Procédé selon la revendication 1 ou la revendication 2, **caractérisé par le fait que** la première étape de coagulation et de décantation, comprenant trois temps : un premier temps au cours duquel on incorpore sous agitation rapide des ions ferriques par exemple sous forme de chlorure ferrique, puis, dans un deuxième temps, on apporte du lait de chaux sous agitation lente, et le troisième temps consiste en une décantation pour recueillir, d'une part, une phase liquide et, d'autre part, une phase solide.

4. Procédé selon la revendication 3 lorsqu'elle dépend de la revendication 2, **caractérisé par le fait que** l'on ajoute environ 500 ppm de chlorure ferrique par m³ de lisier de porc traité.

5. Procédé selon la revendication 3 lorsqu'elle dépend de la revendication 2, **caractérisé par le fait que** l'on ajoute environ 15 kg de chaux (CaO) par m³ de lisier de porc traité.

6. Procédé selon la revendication 3, **caractérisé par le fait que** la phase liquide ainsi obtenue est recyclée vers des élevages de porcs.
